# EUROPÄISCHE PATENTSCHRIFT

(11) **EP 2 591 976 B1**
(45) Veröffentlichungstag und Bekanntmachung des Hinweises auf die Patenterteilung: **30.11.2016**
(21) Anmeldenummer: 12191831.2
(22) Anmeldetag: 08.11.2012
(51) Int. Cl.: B62D 5/00, B62D 6/02, B62D 1/22, B62D 5/04

(54) **Lenkvorrichtung für ein Kraftfahrzeug**
Steering device for a motor vehicle
Dispositif de direction pour un véhicule automobile

(30) Priorität: 10.11.2011 DE 102011118133
(43) Veröffentlichungstag der Anmeldung: 15.05.2013
(73) Patentinhaber: Leopold Kostal GmbH & Co. KG, 58513 Lüdenscheid (DE)
(72) Erfinder: Bläsing, Frank, 59457 Werl (DE)
(74) Vertreter: Kerkmann, Detlef

(56) Entgegenhaltungen:
- DE-A1- 4 025 697
- DE-A1-102004 055 282
- US-A1- 2002 063 015
- US-A1- 2006 118 350

## Beschreibung

Die Erfindung betrifft eine Lenkvorrichtung für ein Kraftfahrzeug, mit einer primären Handhabe, die über eine mechanische Verbindung an eine Lenkungsmechanik zur Beeinflussung der Fahrtrichtung des Kraftfahrzeugs angekoppelt ist, mit einem elektrisch betriebenen Lenkungssteuersystem, aufweisend ein Lenkungssteuergerät und einen daran angeschlossenen elektrischen Aktuator zur Einwirkung auf die Lenkungsmechanik, und mit einer sekundäre Handhabe, die über eine elektrische Verbindung an das Lenkungssteuergerät angeschlossen ist.

Eine derartige Lenkvorrichtung ist aus der US-Patentschrift US 4,476,954 bekannt. Dieses Dokument beschreibt eine Fernsteuervorrichtung für ein Kraftfahrzeug, bei der an eine mechanische Lenkwelle ein elektrischer Drehaktuator angekoppelt ist, und bei der mit den Pedalvorrichtungen zum Beschleunigen und Verzögern des Kraftfahrzeugs elektrische Linearaktuatoren verbunden sind. Sämtliche Aktuatoren sind durch Betätigung einer joystickähnlichen Vorrichtung über ein elektronisches Steuergerät beeinflussbar. Hierdurch wird es auch Personen mit schweren körperlichen Beeinträchtigungen (z. B. einer Querschnittslähmung) ermöglicht, ein Kraftfahrzeug zu führen. Die joystickähnliche Vorrichtung stellt hier eine sekundäre Handhabe zur Fahrzeugsteuerung dar; die primäre Lenkungssteuerung, also das Lenkrad des Kraftfahrzeugs ist ebenso wie die genannten Pedalvorrichtungen als weitere Steuerungsmöglichkeit des Kraftfahrzeugs vorhanden. Damit bleibt das Kraftfahrzeug auch auf konventionelle Weise benutzbar, was vorteilhaft für Personen ist, für die die Verwendung der sekundären Handhabe ungewohnt ist.

Bei dieser vorbekannten Lenkvorrichtung dient die sekundäre Handhabe im Wesentlichen dazu, die Steuerungsmöglichkeiten der primären Handhabe und der Pedalvorrichtungen durch alternativ ausgeführte Bedienungselemente zu wiederholen.

Die Patentanmeldung US 2006/118350 A1 beschreibt eine Fahrzeug-Steuer-/Regelvorrichtung, die Betätigungszustandsgrößen von zwei unabhängigen Betätigungselementen erfasst, um auf der Grundlage einer Differenz zwischen den erfassten Betätigungszustandsgrößen eine Lenkeinheit zu steuern oder zu regeln.

Es stellte sich die Aufgabe, eine Lenkvorrichtung für ein Kraftfahrzeug zu schaffen, bei der eine sekundäre Handhabe gegenüber der primären Handhabe zusätzliche vorteilhafte Nutzungsmöglichen eröffnet.

Diese Aufgabe wird erfindungsgemäß dadurch gelöst, dass die sekundäre Handhabe mit einem durch das Lenkungssteuergerät in Abhängigkeit von der jeweiligen Betriebssituation des Kraftfahrzeugs vorgebbaren Anteil der gesamten durch den elektrischen Aktuator erzielbaren Lenkwirkung auf die Lenkungsmechanik einwirkt.

Im Gegensatz zu bekannten Lösungen dient die sekundäre Handhabe hier nicht als alternative Steuerungsmöglichkeit zur primären Handhabe, sondern stellt zusätzliche Funktionen, und zwar vorzugsweise in Abhängigkeit von äußeren Rand- und Umgebungsbedingungen zur Verfügung. Die sekundäre Handhabe kann so in bestimmten Betriebssituationen die Funktion der primären Handhabe vorteilhaft ergänzen.

Als Beispiel sei eine Autobahn- oder Stausituation genannt, in der meistens nur kleine Lenkkorrekturen erforderlich sind, um das Fahrzeug in der Spur zu halten.

Es kann vorteilhaft vorgesehen sein, der sekundären Handhabe abhängig von vorliegenden Betriebssituationen des Kraftfahrzeugs unterschiedliche Funktionalitäten oder Eingriffsmöglichkeiten zuzuordnen. Die jeweilige Betriebssituation kann dabei vom Lenkungssteuergerät anhand von Sensordaten automatisch erkannt oder/und durch den Fahrer manuell vorgegeben werden.

So kann die Übersetzung einer Betätigung der sekundären Handhabe in eine Lenkbewegung in Abhängigkeit von der durch Sensoren aktuell ermittelten Fahrzeuggeschwindigkeit erfolgen. Beispielsweise kann vorgesehen sein, dass bei hohen Fahrzeuggeschwindigkeiten Betätigungen stark untersetzt auf den Lenkaktuator übertragen werden, so dass die beispielhaft als Joystick ausgeführte sekundäre Handhabe eine feinfühlige Richtungssteuerung des Kraftfahrzeugs ermöglicht. Bei niedrigen Fahrzeuggeschwindigkeiten kann dagegen eine hoch übersetzte Lenkungsbetätigung vorgesehen sein, um ein Rangieren, etwa zum Einparken, zu erleichtern.

Die Anpassung eines funktionalen Zusammenhangs zwischen einer Betätigung der sekundären Handhabe und einer daraus resultierenden Lenkungsbetätigung kann außer von der Fahrzeuggeschwindigkeit auch in Abhängigkeit von weiteren, durch Sensoren erfassten Zustandsgrößen wie Lenkraddrehwinkel, oder Fahrzeuggierwinkel, sowie auch von Navigationsdaten und Fahrerzustandsdaten erfolgen, wobei das Lenkungssteuergerät selbstverständlich auch mehrere dieser Größen gleichzeitig berücksichtigen kann.

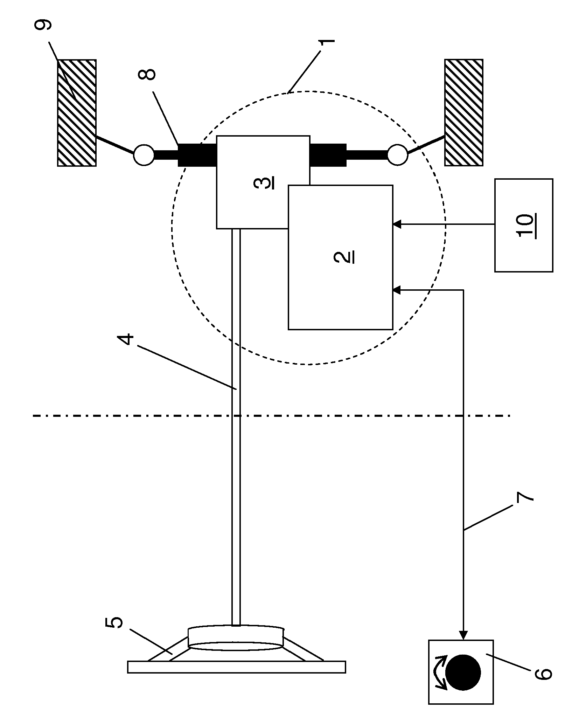

Vorteilhafte Ausgestaltungen und Weiterbildungen des Aufbaus und der Funktionsweise einer erfindungsgemäßen Lenkvorrichtung gehen aus den abhängigen Ansprüchen und dem nachfolgend anhand der Zeichnung dargestellten Ausführungsbeispiel der Erfindung hervor. Die einzige Figur skizziert den prinzipiellen Aufbau der Lenkvorrichtung.
Dargestellt ist ein Lenkrad 5 als eine primäre Handhabe zur Steuerung eines Kraftfahrzeugs, welches über eine mechanische Verbindung 4, die üblicherweise als Lenkwelle ausgeführt ist, mit einer Lenkungsmechanik 8 verbunden ist, welche wiederum mit den Vorderräder 9 des Kraftfahrzeugs in Verbindung steht. Durch eine Drehung des Lenkrads 5 kann die Winkelstellung der Vorderräder 9 und damit die Fahrtrichtung des Kraftfahrzeugs auf mechanische Weise vorgegeben werden.

Auf die mechanische Verbindung 4 oder direkt auf die Lenkungsmechanik 8 wirkt zusätzlich ein elektrisches Lenkungssteuersystem 1 ein, welches zumindest einen elektrischen Aktuator 3 aufweist, der durch ein Lenkungssteuergerät 2 angesteuert wird. Das Lenkungssteuersystem 1 bildet beispielsweise eine Servolenkung oder ein Lenkungsstabilisierungsystem aus.

Das Lenkungssteuersystem 1 kann darüber hinaus auch weitere Funktionen wie zum Beispiel Parkassistenzfunktionen realisieren, bei der das Lenkungssteuersystem 1 auf der Basis von Sensoren 10, wie beispielsweise Ultraschall- oder Radarsensoren automatisch die Lenkungssteuerung bei einem Einparkvorgang übernimmt.

Als einer der Sensoren 10 kann eine Fahrerassistenzkamera vorgesehen sein, welche Straßenmarkierungen erfasst, aufgrund der das Lenkungssteuersystem 1 eine automatische Spurhaltung des Kraftfahrzeugs unterstützt. Die hier genannten durch ein Lenkungssteuersystem realisierbaren Funktionen sind selbstverständlich rein beispielhaft und nicht abschließend aufgezählt.

Das Lenkungssteuersystem 1 wird ergänzt durch eine sekundäre Handhabe 6, die über eine elektrische Verbindung 7 an das Lenkungssteuergerät 2 angeschlossen ist. Die sekundäre Handhabe 6, die hier symbolisch als ein elektrischer Drehsteller dargestellt ist, kann auch in Form einer Walze, eines Hebels, eines Touchpads oder eines Touchsticks ausgeführt sein.

Die sekundäre Handhabe 6 erzeugt bei einer manuellen Betätigung durch den Fahrer des Kraftfahrzeugs ein elektrisches Signal, welches eine Lenkwinkel- oder Lenkmomentenvorgabe repräsentiert und das über die elektrische Verbindung 7 dem Lenkungssteuergerät 2 als eine Eingangsgröße zugeführt wird. Der Fahrer hat damit, neben dem Lenkrad 5 als primäre Handhabe, eine zusätzliche Möglichkeit zur Beeinflussung der Lenkungsmechanik 8.

Das Lenkungssteuergerät 2 bestimmt den Anteil der durch die sekundäre Handhabe 6 möglichen Einflussnahme auf die Lenkwirkung der Lenkungsmechanik 8 und zwar in Abhängigkeit von der jeweiligen Betriebssituation des Kraftfahrzeugs. Die Betriebssituation ermittelt das Lenkungssteuergerät 2 aus Signalen verschiedener Sensoren 10 sowie aus sonstigen Zustandsgrößen, zu denen unter anderen die aktuellen Werte der Fahrzeuggeschwindigkeit, des Lenkraddrehwinkel, des Fahrzeuggierwinkel gehören können. Ebenfalls berücksichtigt werden können Navigationsdaten und Fahrerzustandsdaten.

Aus der Gesamtheit der gewichteten Sensordaten unter Einschluss des von der sekundären Handhabe 6 abgegebenen Ausgangssignals berechnet das Lenkungssteuergerät 2 ein Ansteuersignal für den elektrischen Aktuator 3 und steuert den Aktuator 3 entsprechend an.

Vorteilhaft ist es, wenn die sekundäre Handhabe 6 eine statische Haptik aufweist, die über eine 3D-Rastkurve oder über eine Force-Feedback-Einrichtung erzeugt werden kann. Der Fahrer erhält so unmittelbar eine taktile Rückmeldung auf seine Betätigung der sekundären Handhabe 6, wodurch eine Steuerung mit einer höheren Genauigkeit erfolgen kann. Die Force-Feedback-Einrichtung kann vorteilhaft unter Verwendung eines elektromotorischen oder magnetorheologischen Aktuators realistisiert sein.

Um die sekundäre Handhabe 6 ergonomisch möglichst günstig zu platzieren kann diese vorteilhaft an der Mittelkonsole des Kraftfahrzeugs, an der Lenksäule oder sogar direkt am Lenkrad 5 angebracht sein.

Die sekundären Handhabe 6 kann vorteilhaft über eine Funkstrecke mit dem Lenkungssteuergerät 2 verbunden werden, so dass deren Anordnung keine zusätzliche Verkabelung erfordert.

Die Beschreibung deutet hier nur beispielhaft einige von vielen Möglichkeiten an, die auf der erfinderischen Idee beruhen, dass eine sekundäre Handhabe als zusätzliches Bedienelement zur Steuerung einer Lenkvorrichtung vorteilhaft eingesetzt werden kann, insbesondere wenn deren Signale eine von der Betriebssituation abhängige Berücksichtigung und Gewichtung erfahren.

### Bezugszeichen

- 1: Lenkungssteuersystem
- 2: Lenkungssteuergerät
- 3: Aktuator
- 4: mechanische Verbindung (Welle)
- 5: primären Handhabe (Lenkrad)
- 6: sekundäre Handhabe
- 7: elektrische Verbindung
- 8: Lenkungsmechanik
- 9: Vorderräder
- 10: Sensoren

## Patentansprüche

1. Lenkvorrichtung für ein Kraftfahrzeug,
mit einer primären Handhabe (5), die über eine mechanische Verbindung (4) an eine Lenkungsmechanik (8) zur Beeinflussung der Fahrtrichtung des Kraftfahrzeugs angekoppelt ist,
mit einem elektrisch betriebenen Lenkungssteuersystem (1), aufweisend ein Lenkungssteuergerät (2) und einen daran angeschlossenen elektrischen Aktuator (3) zur Einwirkung auf die Lenkungsmechanik (8),
und mit einer sekundäre Handhabe (6), die über eine elektrische Verbindung (7) an das Lenkungssteuergerät (2) angeschlossen ist,
**dadurch gekennzeichnet,**
**dass** die sekundäre Handhabe (6) mit einem durch das Lenkungssteuergerät (2) in Abhängigkeit von der jeweiligen Betriebssituation des Kraftfahrzeugs vorgebbaren Anteil der gesamten durch den elektrischen Aktuator erzielbaren Lenkwirkung auf die Lenkungsmechanik (8) einwirkt.

2. Lenkvorrichtung nach Anspruch 1, **dadurch gekennzeichnet, dass** die sekundäre Handhabe (6) als Drehsteller, Walze, Hebel, Touchpad oder Touchstick ausgeführt ist.

3. Lenkvorrichtung nach Anspruch 1, **dadurch gekennzeichnet, dass** die sekundäre Handhabe (6) eine durch den Fahrer eingebrachte Druck- und/oder Zugkraft erfasst.

4. Lenkvorrichtung nach Anspruch 1, **dadurch gekennzeichnet, dass** die sekundäre Handhabe (6) eine statische Haptik durch eine 3D-Rastkurve erzeugt.

5. Lenkvorrichtung nach Anspruch 1, **dadurch gekennzeichnet, dass** die sekundäre Handhabe (6) eine Haptik durch eine Force-Feedback-Einrichtung erzeugt.

6. Lenkvorrichtung nach Anspruch 5, **dadurch gekennzeichnet, dass** die Force-Feedback-Einrichtung einen elektromotorischen oder magnetorheologischen Aktuator aufweist.

7. Lenkvorrichtung nach Anspruch 1, **dadurch gekennzeichnet, dass** die sekundäre Handhabe (6) in der Mittelkonsole oder an der Lenksäule angeordnet ist.

8. Lenkvorrichtung nach Anspruch 1, **dadurch gekennzeichnet, dass** die elektrische Verbindung der sekundären Handhabe (6) mit dem Lenkungssteuergerät (2) eine Funkstrecke umfasst.

9. Lenkvorrichtung nach Anspruch 1, **dadurch gekennzeichnet, dass** das Lenkungssteuergerät (2) das von der sekundären Handhabe (6) abgegebene Signal in eine Lenkwinkel- oder Lenkmomentenvorgabe zur Ansteuerung des elektrischen Aktuators (3) umsetzt.

10. Lenkvorrichtung nach Anspruch 9, **dadurch gekennzeichnet, dass** das Lenkungssteuergerät (2) die Lenkwinkel- oder Lenkmomentenvorgabe bezüglich eines situationsabhängig zulässigen Wertebereichs beschränkt.

11. Lenkvorrichtung nach Anspruch 9, **dadurch gekennzeichnet, dass** das Lenkungssteuergerät (2) das von der sekundären Handhabe (6) abgegebene Signal in Abhängigkeit weiterer Zustandsgrößen in eine Lenkwinkel- oder Lenkmomentenvorgabe umsetzt.

12. Lenkvorrichtung nach Anspruch 11, **dadurch gekennzeichnet, dass** zu den weiterer Zustandsgrößen mindestens eine der folgenden Größen gehört: Fahrzeuggeschwindigkeit, Lenkraddrehwinkel, Fahrzeuggierwinkel, sowie Größen aus Navigationsdaten und Fahrerzustandsdaten.

## Claims

1. Steering device for a motor vehicle,
having a primary handling element (5) which is coupled by way of a mechanical connection (4) to a steering mechanism (8) for the purpose of influencing the direction of travel of the motor vehicle,
having an electrically operated steering control system (1) comprising a steering control unit (2) and an electrical actuator (3) connected to the same for the purpose of acting on the steering mechanism (8),
and having a secondary handling element (6) which is connected to the steering control unit (2) by way of an electrical connection (7),
**characterised in that**
the secondary handling element (6) acts on the steering mechanism (8) with a proportion of the total steering effect which can be achieved by the electrical actuator and which is predetermined by the steering control unit (2) depending on the relevant operational situation of the vehicle.

2. Steering device according to Claim 1, **characterised in that** the secondary actuating device (6) is designed as a rotary actuator, roller, lever, touch-pad or touch-stick.

3. Steering device according to Claim 1, **characterised in that** the secondary handling element (6) senses a pressure and/or tension force introduced by the driver.

4. Steering device according to Claim 1, **characterised in that** the secondary handling element (6) generates static haptics by means of a 3D detent curve.

5. Steering device according to Claim 1, **characterised in that** the secondary handling element (6) generates haptics by means of a force-feedback facility.

6. Steering device according to Claim 5, **characterised in that** the force-feedback facility has an electromotive or magneto-rheological actuator.

7. Steering device according to Claim 1, **characterised in that** the secondary handling element (6) is located in the centre console or on the steering column.

8. Steering device according to Claim 1, **characterised in that** the electrical connection of the secondary handling element (6) to the steering control unit (2) incorporates a radio transmission path.

9. Steering device according to Claim 1, **characterised in that** the steering control unit (2) converts the signal emitted by the secondary handling element (6) into a steering angle or steering torque default value for triggering the electric actuator (3).

10. Steering device according to Claim 9, **characterised in that** the steering control unit (2) limits the steering angle or steering torque default value with respect to a value range that is admissible depending on the situation.

11. Steering device according to Claim 9, **characterised in that** the steering control unit (2) converts the signal emitted by the secondary handling element (6) into a steering angle or steering torque default value depending on other state variables.

12. Steering device according to Claim 11, **characterised in that** at least one of the following variables pertain to the other state variables: vehicle speed, rotation angle of steering wheel, vehicle yaw angle, as well as variables from navigation data and driver state data.

## Revendications

1. Dispositif de direction pour un véhicule automobile,
avec une manette primaire (5), qui est couplée, par l'intermédiaire d'une liaison mécanique (4), avec une mécanique de direction (8) pour influencer la direction de marche du véhicule automobile,
avec un système de commande de direction (1), fonctionnant électriquement, qui présente un appareil de commande de direction (2) et un actionneur électrique (3) y raccordé, agissant sur la mécanique de direction (8),
et avec une manette secondaire (6), qui est raccordée à l'appareil de commande de direction (2) par l'intermédiaire d'une liaison électrique (7), **caractérisé en ce que**
la manette secondaire (6) agit sur la mécanique de direction (8) avec une fraction de l'effet de direction total pouvant être atteint par l'actionneur électrique, qui peut être prédéfinie par l'appareil de commande de direction (2) en fonction de chaque situation de fonctionnement du véhicule automobile.

2. Dispositif de direction selon la revendication 1, **caractérisé en ce que** la manette secondaire (6) est réalisée en tant que régleur rotatif, cylindre, levier, pavé tactile ou bâton tactile.

3. Dispositif de direction selon la revendication 1, **caractérisé en ce que** la manette secondaire (6) capte une force de pression et / ou de traction, exercée par le conducteur.

4. Dispositif de direction selon la revendication 1, **caractérisé en ce que** la manette secondaire (6) génère un effet haptique par l'intermédiaire d'une came 3D.

5. Dispositif de direction selon la revendication 1, **caractérisé en ce que** la manette secondaire (6) génère un effet haptique au moyen d'un système Force-Feedback.

6. Dispositif de direction selon la revendication 5, **caractérisé en ce que** le système Force-Feedback présente un actionneur électromoteur ou magnéto-rhéologique.

7. Dispositif de direction selon la revendication 1, **caractérisé en ce que** la manette secondaire (6) est disposée dans la console centrale ou sur la colonne de direction.

8. Dispositif de direction selon la revendication 1, **caractérisé en ce que** la liaison électrique entre la manette secondaire (6) et l'appareil de commande de direction (2) comprend une voie radio.

9. Dispositif de direction selon la revendication 1, **caractérisé en ce que** l'appareil de commande de direction (2) convertit le signal, lancé par la manette secondaire (6), en une prédéfinition d'angle de direction et de couples de direction pour l'excitation de l'actionneur électrique (3).

10. Dispositif de direction selon la revendication 9, **caractérisé en ce que** l'appareil de commande de direction (2) limite la définition d'angle de direction ou de couples de direction en ce qui concerne une plage de valeurs, admissible en fonction de la situation.

11. Dispositif de direction selon la revendication 9, **caractérisé en ce que** l'appareil de commande de direction (2) convertit le signal, lancé par la manette secondaire (6), en une prédéfinition d'angle de direction et de couples de direction, en fonction d'autres grandeurs d'état.

12. Dispositif de direction selon la revendication 11, **caractérisé en ce que** les autres grandeurs d'état comprennent au moins les grandeurs suivantes :
Vitesse du véhicule automobile, angle de rotation du volant de direction, angle de lacet du véhicule automobile, ainsi que les grandeurs provenant de données de navigation et de données d'état du véhicule automobile.
